# EUROPEAN PATENT SPECIFICATION

(11) **EP 1 939 086 B1**
(45) Date of publication and mention of the grant of the patent: **09.03.2011**
(21) Application number: 07008897.6
(22) Date of filing: 02.05.2007
(51) Int. Cl.: B62M 9/16, B62M 9/12

(54) **Bicycle rear derailleur**
Hinterradkettenschaltung für ein Fahrrad
Dérailleur arrière de bicyclette

(30) Priority: 26.12.2006 US 645030
(43) Date of publication of application: 02.07.2008
(73) Proprietor: SHIMANO INC., Osaka 590-8577 (JP)
(72) Inventor: Nagasawa, Hajime, Sakai City Osaka 590-8577 (JP)
(74) Representative: Harrison, Robert John

(56) References cited:
- EP-A- 1 568 591
- EP-A1- 1 486 412
- FR-A- 2 520 693
- US-A- 4 580 327
- US-A1- 2003 083 162
- US-B1- 6 202 506

## Description

### Field of the Invention

This invention generally relates to a bicycle rear derailleur. More specifically, the present invention relates to a chain guide of a bicycle rear derailleur having at least one non-metallic cage plates.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle rear derailleur.

A bicycle rear derailleur is used to selectively engage a chain with one of a plurality of sprockets that rotate with the rear wheel of the bicycle. A typical rear derailleur comprises a base member, a movable member supporting a chain guide and a pair of links coupled between the base member and the movable member so that the chain guide moves laterally relative to the base member. The chain guide typically has an inner cage plate, an outer cage plate, an upper pulley rotatably supported between the inner and outer cage plates and a lower pulley rotatably supported between the inner and outer cage plates. In the past, the cage plates were typically made of metal with a pair of bolts acting as the pulley axles for the upper and lower pulleys. Sometimes these bolts (pulley axles) are threaded into one of the cage plates to fasten the bolts to the cage plates. While metal cage plates work well, it is desirable to make the rear derailleur including the cage plates as lightweight as possible. Document FR 2 520 693 discloses a device according to the preamble of claim 1.

In view of the above, it will be apparent to those skilled in the art from this disclosure that there exists a need for an improved rear derailleur. This invention addresses this need in the art as well as other needs, which will become apparent to those skilled in the art from this disclosure.

### SUMMARY OF THE INVENTION

One object of the present invention is to provide a bicycle rear derailleur with at least one non-metallic cage plate.

In accordance with one aspect of the present invention, a bicycle derailleur cage plate is provided with a non-metallic cage body, and a first metallic insert. The first metallic insert has a first pulley axle receiving bore and a first fastening part at least partially embedded in the non-metallic cage body. The first fastening part of the first metallic insert is a plurality of first ribs or projections that extends axially along an annular base part of the first metallic insert, and wherein the plurality of first ribs or projections extends continuously along the annular base part from one end of the first metallic insert (552) to another other end of the first metallic insert.

In accordance with another aspect of the present invention, a bicycle derailleur is provided with a base member, a linkage assembly movably coupled to the base member, a movable member movably coupled to the linkage assembly, and a chain guide movably coupled to the movable member. The chain guide includes a first cage plate, a second cage plate, a first pulley rotatably supported between the first and second cage plates and a second pulley rotatably supported between the first and second cage plates. The first cage plate includes a first non-metallic cage body and a first metallic insert. The first metallic insert has a first pulley axle receiving bore and a first fastening part at least partially embedded in the non-metallic cage body.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:

Figure 1 is a side elevational view of a bicycle showing a rear derailleur in accordance with a first embodiment of the present invention and wherein the insert is for illustrative purpose. An insert according to the invention is described in reference with figures 19-21;

Figure 2 is an enlarged outboard elevational view of the rear derailleur illustrated in Figure 1 in accordance with the first embodiment of the present invention;

Figure 3 is an exploded perspective view of the cage chain of the rear derailleur illustrated in Figures 1 and 2 in accordance with the first embodiment of the present invention;

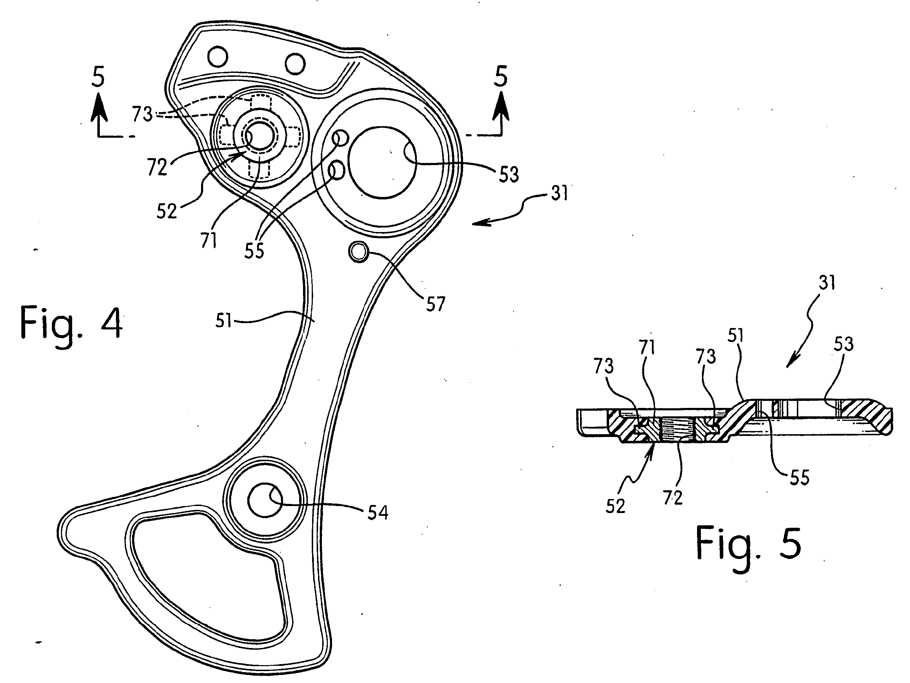

Figure 4 is an enlarged elevational view of the outer cage plate of the rear derailleur illustrated in Figures 1 and 2 with an insert not in accordance with the first embodiment of the present invention;

Figure 5 is an enlarged cross sectional view of the outer cage plate as seen along section line 5-5 of Figure 4;

Figure 6 is an enlarged elevational view of the inner cage plate of the rear derailleur illustrated in Figures 1 and 2 with an insert not in accordance with the first embodiment of the present invention;

Figure 7 is an enlarged cross sectional view of the inner cage plate as seen along section line 7-7 of Figure 6;

Figure 8 is an enlarged elevational view of a metallic insert of the rear derailleur illustrated in Figures 1 and 2 not in accordance with the first embodiment of the present invention, wherein the insert is for illustrative purpose. An insert according to the invention is describe din reference with figures 19-21;

Figure 9 is an enlarged cross sectional view of the metallic insert as seen along section line 9-9 of Figure 8;

Figure 10 is a perspective view of a metallic insert not in accordance with the first embodiment of the present invention;

Figure 11 is an exploded perspective view of a cage chain of a rear derailleur in accordance with a second embodiment of the present invention and wherein the insert is for illustrative purpose. An insert according to the invention is described in reference with figures 19-21;

Figure 12 is an exploded perspective view of the cage chain of the rear derailleur in accordance with a third embodiment of the present invention and wherein the insert is for illustrative purpose. An insert according to the invention is described in reference with figures 19-21;

Figure 13 is an enlarged elevational view of a metallic insert embedded in a cage plate not in accordance with the present invention and wherein the insert is for illustrative purpose. An insert according to the invention is described in reference with figures 19-21;

Figure 14 is an enlarged fragmentary cross sectional view of a portion of the cage plate and the metallic insert as seen along section line 14-14 of Figure 13 not in accordance with the present invention;

Figure 15 is a perspective view of the metallic insert not in accordance with the fourth embodiment of the present invention

Figure 16 is an enlarged elevational view of a metallic insert embedded in a cage plate not in accordance with the present invention and wherein the insert is for illustrative purpose. An insert according to the invention is described in reference with figures 19-21;

Figure 17 is an enlarged fragmentary cross sectional view of a portion of the cage plate and the metallic insert as seen along section line 17-17 of Figure 16 ;

Figure 18 is a perspective view of the metallic insert not in accordance with the present invention;

Figure 19 is an enlarged elevational view of a metallic insert embedded in a cage plate in accordance with the present invention;

Figure 20 is an enlarged fragmentary cross sectional view of a portion of the cage plate and the metallic insert as seen along section line 20-20 of Figure 19 in accordance with the present invention; and

Figure 21 is a perspective view of the metallic insert in accordance with the present invention.

### DETAILED DESCRIPTION OF THE PREFERRED EMBODIMENTS

Selected embodiments not according to the invention because the inserts do not have a plurality of first ribs or projections extends continuously along the annular base part from one end of the first metallic insert to another other end of the first metallic insert (embodiments 1-5) or according to the present invention (embodiment 6, wherein the insert has a plurality of first ribs or projections extends continuously along the annular base part from one end of the first metallic insert to another other end of the first metallic insert) will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

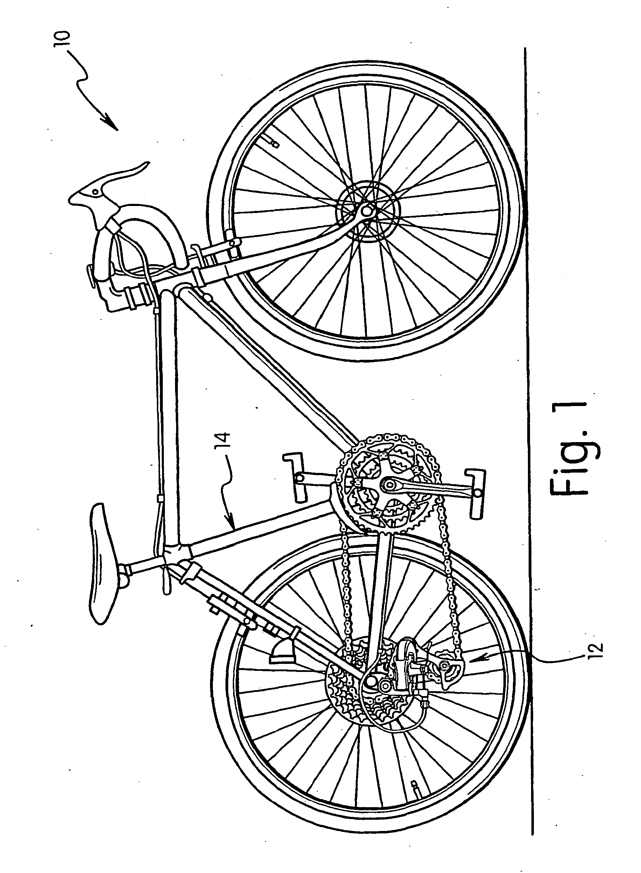

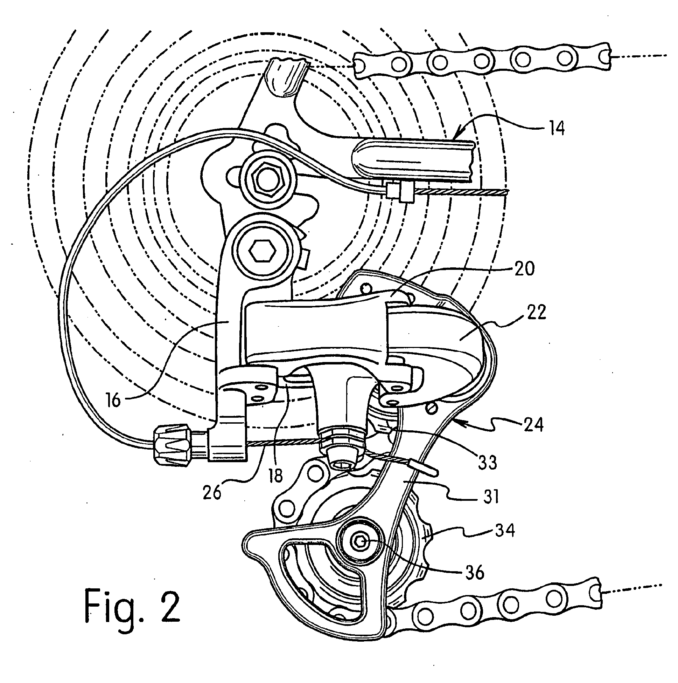

Referring initially to Figure 1, a bicycle is illustrated that is equipped with a bicycle rear derailleur 12 in accordance with a first embodiment of the present invention. As shown in Figures 1 and 2, the bicycle 10 has a frame 14 in which the rear derailleur 12 is secured thereto. As shown in Figure 2, the rear derailleur 12 basically includes a base member 16, a pair of links 18 and 20 forming a linkage assembly and a movable member 22 with a chain guide 24 pivotally mounted to the movable member 22. The rear derailleur 12 is movably secured to a rear mounting portion of the frame 14 of the bicycle 10.

Basically, the rear derailleur 12 is a conventional rear derailleur in which an inner wire 26 of a Bowden cable assembly is coupled to one of the links 18 and 20 (e.g., the inner wire coupled to the link 20 in the illustrated embodiment) to move the movable member 22 and the chain guide 24 laterally relative to the base member 16. A coil spring (not shown) is connected to diagonally opposite pivot shafts so that links 18 and 20 are biased together. Generally speaking, the present invention can be used with any rear derailleur that uses a chain guide. Thus, the parts of the rear derailleur 12 will not be discussed or illustrated in detail herein, except for those parts that relate to the chain guide 24 of the present invention.

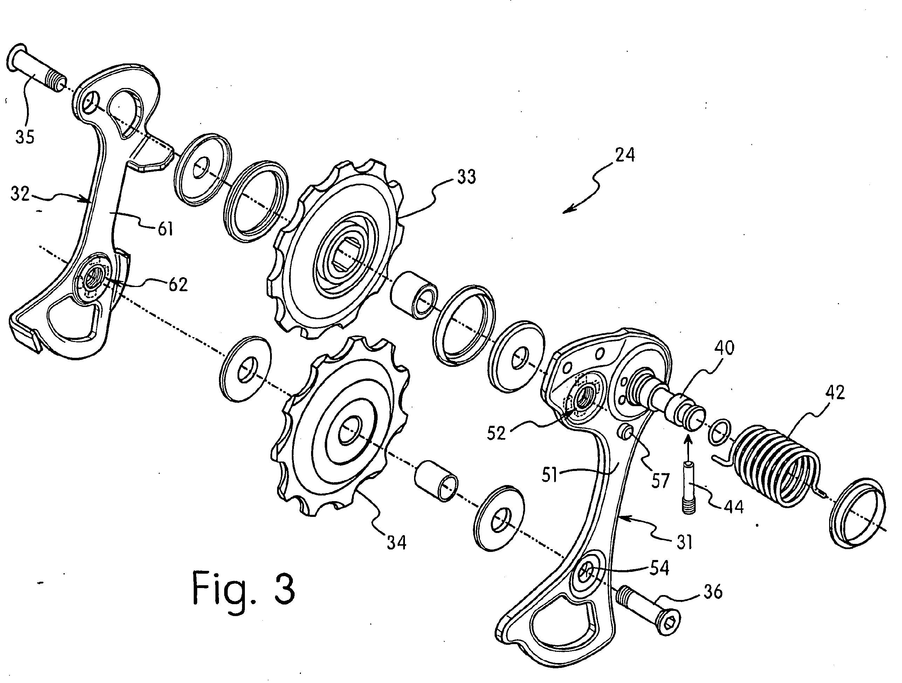

Basically, as best seen in Figure 3, the chain guide 24 has an outer cage plate 31, an inner cage plate 32, an upper or guide pulley 33 and a lower or tension pulley 34. The upper pulley 33 is rotatably supported between the outer and inner cage plates 31 and 32 by an upper axle or pulley bolt 35. The lower pulley 34 is rotatably supported between the outer and inner cage plates 31 and 32 by a lower axle or pulley bolt 36. The chain guide 24 is pivotally supported to the movable member 22 by a pivot axle 40 that is fixed to the outer cage plate 31. A torsion spring 42 is disposed on the pivot axle 40 with a first end ofthe torsion spring 42 coupled to the outer cage plate 31 and a second end of the torsion spring 42 coupled to the movable member 22 (i.e., second end of the torsion spring 42 is located in a bore of the movable member 22). A screw 44 retains the pivot axle 40 in the movable member 22 in a conventional manner.

In the first embodiment (not claimed), the outer cage plate 31 basically includes a non-metallic cage body 51 and a metallic insert 52 embedded in the non-metallic cage body 51. Preferably, the non-metallic cage body 51 is formed from a carbon fiber. reinforced plastic such that the metallic insert 52 is embedded in the non-metallic cage body 51. The non-metallic cage body 51 of the outer cage plate 31 also has a pivot axle opening 53, a pair of spring receiving openings 55 and a stop pin receiving opening 56. The pivot axle 40 is fixedly secured within the axle opening 53. The pulley bolt 36 extends through the lower axle bore 54 such that the outer cage plate 31 is one end of the pulley bolt 36. The spring receiving openings 55 are arranged so that one or the other of the spring receiving openings 55 receives the first end of the torsion spring 42 therein. The stop pin receiving opening 56 has a stop pin 57 (Figure 3) secured thereto for limiting rotational of the chain cage 24 relative to the movable member 22.

The inner cage plate 32 basically includes a non-metallic cage body 61 and a metallic insert 62 embedded in the non-metallic cage body 61. Preferably, the non-metallic cage body 61 is formed from a carbon fiber reinforced plastic such that the metallic insert 62 is embedded in the non-metallic cage body 61. The non-metallic cage body 61 of the inner cage plate 32 also has an upper axle bore 64 for receiving the pulley bolt 35 therethrough.

Preferably, the metallic inserts 52 and 62 are identically configured so that they can be used interchangeably and reduce the number of parts that need to be manufactured to create the chain guide 24. Thus, the following description of the metallic insert 52 applies to the metallic insert 62. Of course, if needed and/or desired, the metallic inserts 52 and 62 can have different configurations.

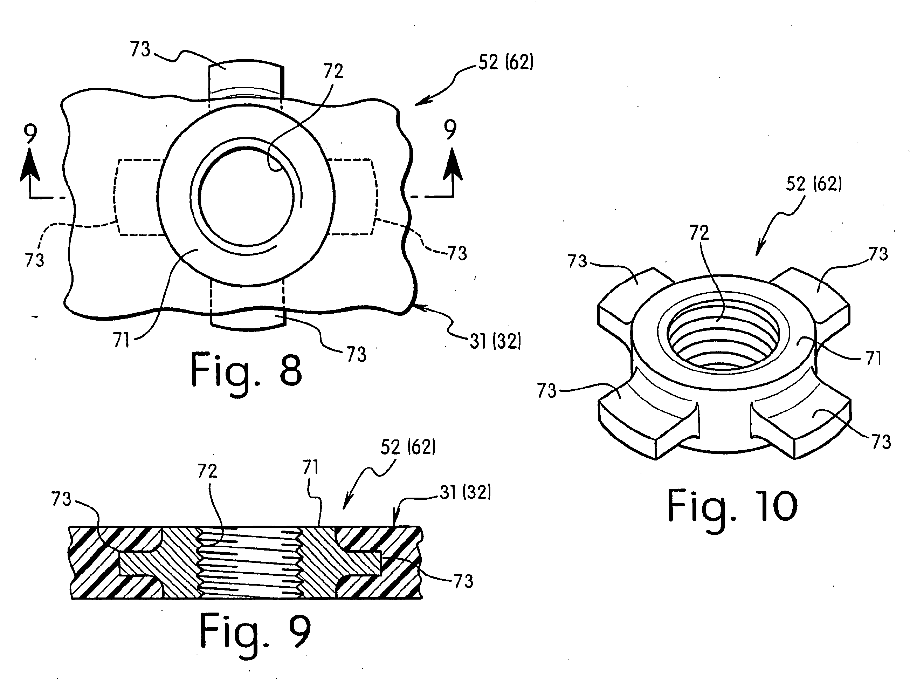

Referring now to Figures 8 to 10, the metallic insert 52 has an annular base part 71 that defines a pulley axle receiving bore 72 and a fastening part 73 that extends outwardly from the annular base part 71. The pulley axle receiving bore 72 of the metallic insert 52 supports one end of the pulley bolt or axle 35 of the pulley 33. Preferably, the pulley axle receiving bore 72 of the metallic insert 52 has internal threads for threadedly engaging the threads of the pulley bolt or axle 35 and 36. The fastening part 73 of the metallic insert 52 is completely embedded in the non-metallic cage body 51. The fastening part 73 of the metallic insert 52 includes a plurality (four) of projections that extends radially from the annular base part 71. The fastening part 73 is preferably located in the middle of the non-metallic cage body 51.

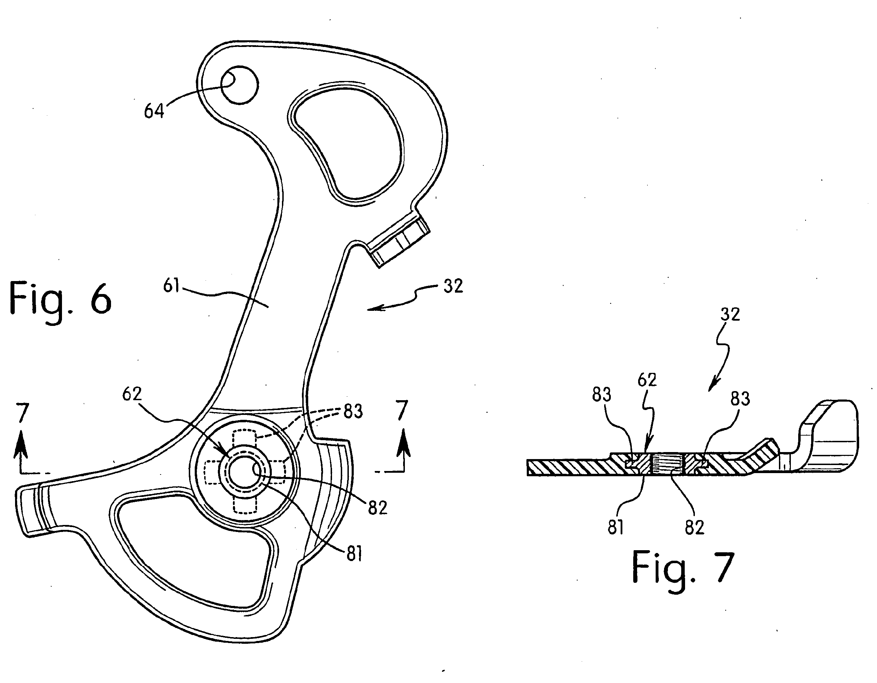

Referring now to Figures 6 and 7, the metallic insert 62 has an annular base part 81 that defines a pulley axle receiving bore 82 and a fastening part 83 that extends outwardly from the annular base part 81. The pulley axle receiving bore 82 of the metallic insert 62 supports one end of the pulley bolt or axle 36 of the pulley 34. Preferably, the pulley axle receiving bore 82 of the metallic insert 62 has internal threads for threadedly engaging the threads of the pulley bolt or axle 36. The fastening part 83 of the metallic insert 62 is completely embedded in the non-metallic cage body 61. The fastening part 83 of the metallic insert 62 includes a plurality (four) of projections that extends radially from the annular base part 81. The fastening part 83 is preferably located in the middle of the non-metallic cage body 61.

### SECOND EMBODIMENT (not claimed)

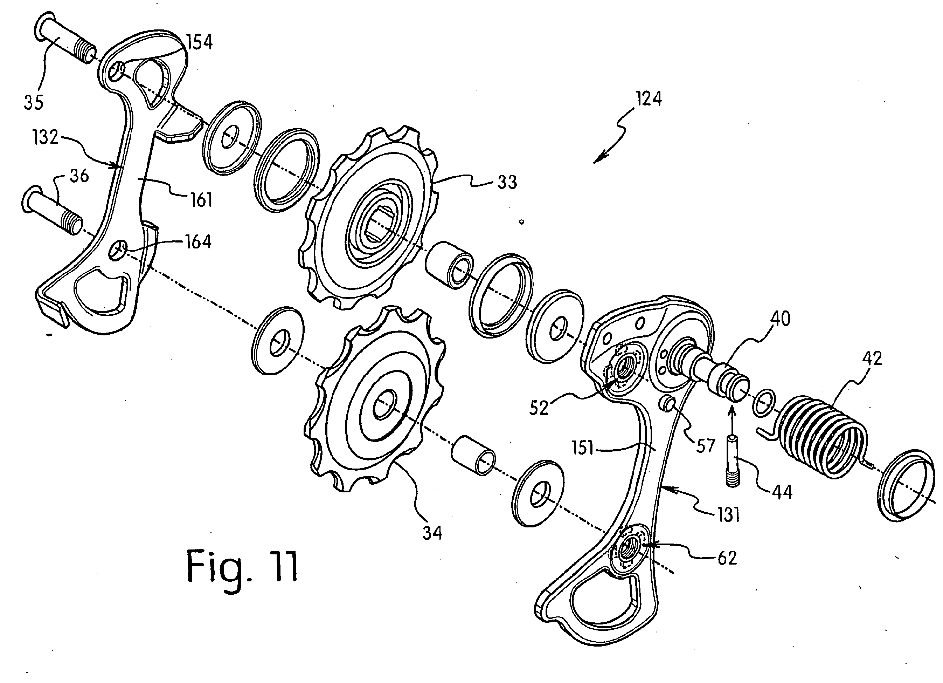

Referring now to Figure 11, a chain guide 124 in accordance with a second embodiment will now be explained. The chain guide 124 is pivotally supported to the movable member 22 by the pivot axle 40. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

Basically, the chain guide 124 of the second embodiment is identical to the chain guide 24 of the first embodiment, except that the outer and inner cage plates 31 and 32 have been replaced with an outer cage plate 131 and an inner cage plate 132 in which both of the metallic inserts 52 and 62 have been embedded in the outer cage plate 131. Thus, the pulley bolts or axles 35 and 36 are inserted through lower and upper axle bores 154 and 164 formed in the non-metallic body 161 of the inner cage plate 132, and then threaded into the metallic inserts 52 and 62 embedded in the non-metallic body 151 of the outer cage plate 131.

### THIRD EMBODIMENT (not claimed)

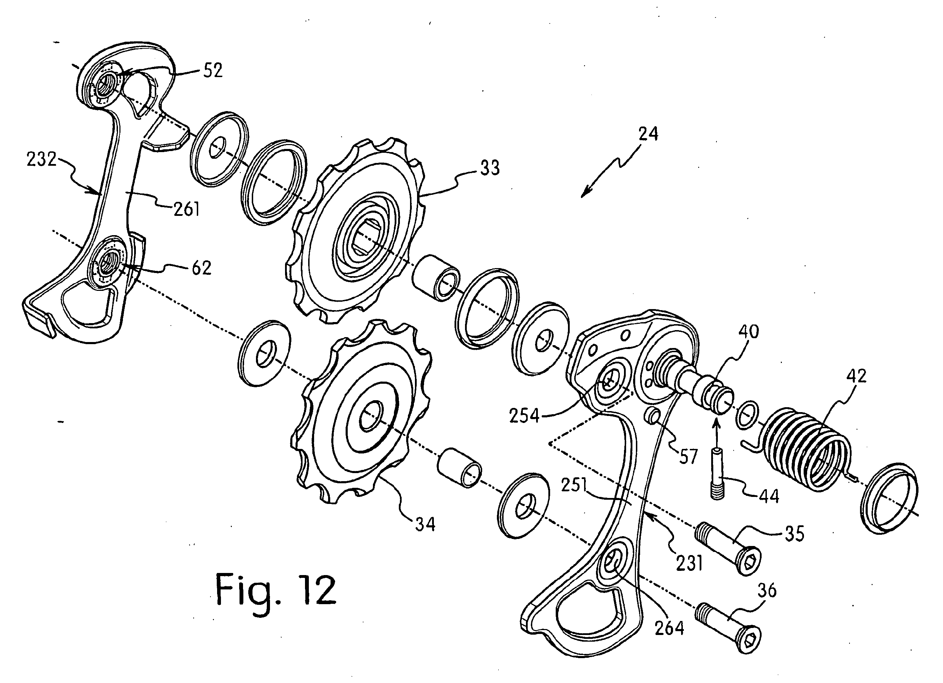

Referring now to Figure 12, a chain guide 224 in accordance with a third embodiment will now be explained. The chain guide 224 is pivotally supported to the movable member 22 by the pivot axle 40. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

Basically, the chain guide 224 of the second embodiment is identical to the chain guide 24 of the first embodiment, except that the outer and inner cage plates 31 and 32 have been replaced with an outer cage plate 231 and an inner cage plate 232 in which both of the metallic inserts 52 and 62 have been embedded in the inner cage plate 232. Thus, the pulley bolts or axles 35 and 36 are inserted through lower and upper axle bores 254 and 264 formed in the non-metallic body 261 of the outer cage plate 232, and then threaded into the metallic inserts 52 and 62 embedded in the non-metallic body 251 of the inner cage plate 232.

### FOURTH EMBODIMENT (not claimed)

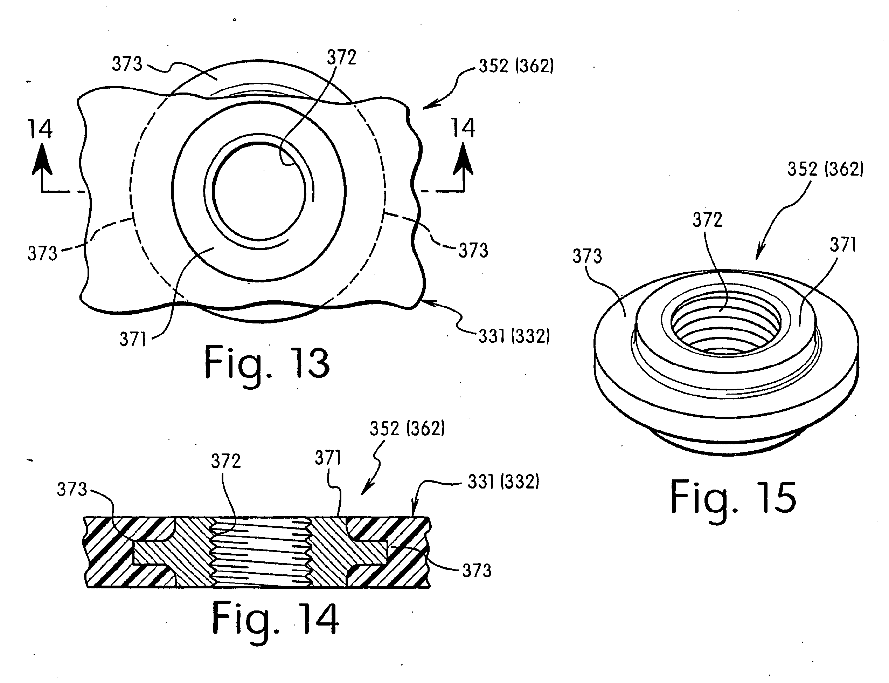

Referring now to Figures 13 to 15, a chain plate 331 (332) with a metallic insert 352 (362) will now be explained in accordance with a fourth embodiment. The chain plate 331 (332) can either the outer or inner chain plate with the metallic insert 352 (362) being an upper axle attachment member or lower axle attachment member. In other words, the metallic insert 352 (362) can used in place of each of the metallic inserts 52 and 62 in the chain plates of each of the first, second and third embodiments. Thus, the shape of the chain plate 331 (332) is identical to anyone of the chain plates of first, second and third embodiments such that the chain plate 331 (332) has only one or two of the metallic inserts 352 (362) if needed and/or desired. For this reason, the reference numerals in the parenthesizes are used to indicate parts relating to the inner chain plate and the metallic insert(s) associated with the inner chain plate, while the reference numerals without parenthesizes are used to indicate parts relating to the outer chain plate and the metallic insert(s) associated with the outer chain plate.

In view of the similarity between this embodiment and the prior embodiments, the parts of this embodiment that are identical to the parts of the prior embodiment will be omitted for the sake of brevity. Rather, it will be apparent to those skilled in the art from this disclosure that a rear derailleur constructed with a pair of the chain plate 331 (332) using a pair of the metallic inserts 352 (362) would be identical to the rear derailleur 12, except for the metallic inserts 352 (362) which are embedded in the chain plates in the same manner as either the first, second or third embodiments.

In this embodiment, the metallic insert 352 (362) has an annular base part 371 that defines a pulley axle receiving bore 372 and an annular fastening part 373 that extends outwardly from the annular base part 371. The pulley axle receiving bore 372 of the metallic insert 352 (362) supports one end of the pulley bolt or axle 35 or 36 of the pulley 33 or 34. Preferably, the pulley axle receiving bore 372 of the metallic insert 352 (362) has internal threads for threadedly engaging the threads of the pulley bolt or axle 35 and 36. The fastening part 373 of the metallic insert 352 (362) is completely embedded in the non-metallic cage body. The fastening part 373 of the metallic insert 352 (362) is preferably a single continuous flange or projection that extends radially from the annular base part 371. The fastening part 373 is preferably located in the middle of the non-metallic cage body.

### FIFTH EMBODIMENT (not claimed)

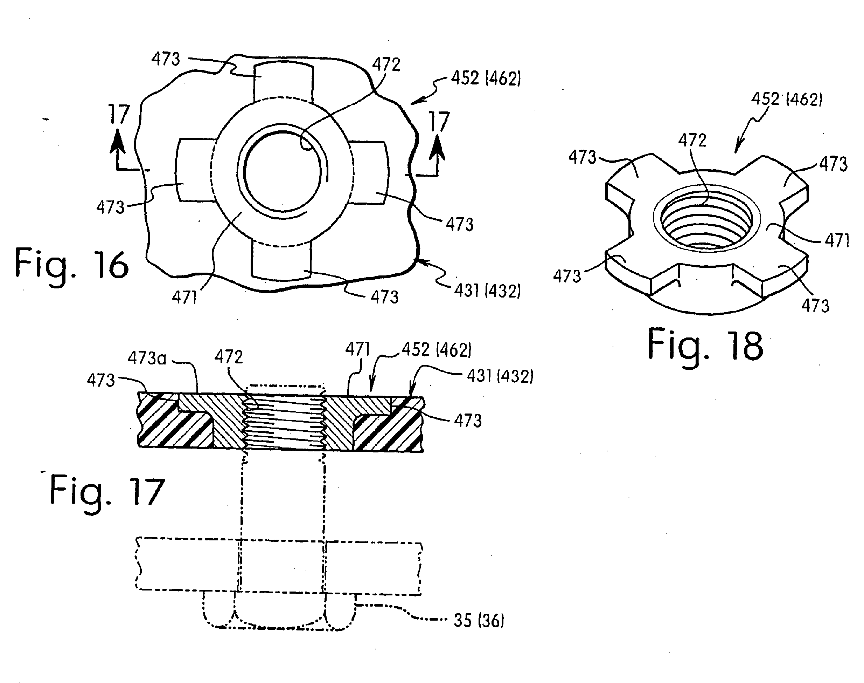

Referring now to Figures 16 to 18, a chain plate 431 (432) with a metallic insert 452 (462) will now be explained in accordance with a fifth embodiment. The chain plate 431 (432) can either the outer or inner chain plate with the metallic insert 452 (462) being either an upper axle attachment member or lower axle attachment member. In other words, the metallic insert 452 (462) can used in place of each of the metallic inserts 52 and 62 in each of the first, second and third embodiments. Thus, the shape of the chain plate 431 (432) is identical to anyone of the chain plates of first, second and third embodiments such that the chain plate 431 (432) has only one or two of the metallic inserts 452 (462) as needed and/or desired. For this reason, the reference numerals in the parenthesizes are used to indicate parts. relating to the inner chain plate and the metallic insert(s) associated with the inner chain plate, while the reference numerals without parenthesizes are used to indicate parts relating to the outer chain plate and the metallic insert(s) associated with the outer chain plate.

In view of the similarity between this embodiment and the prior embodiments, the parts of this embodiment that are identical to the parts of the prior embodiment will be omitted for the sake of brevity. Rather, it will be apparent to those skilled in the art from this disclosure that a rear derailleur constructed with a pair of metallic inserts 452 (462) would be identical to the rear derailleur 12, except for the metallic inserts 452 (462) which are embedded in the chain plates in the same manner as either the first, second or third embodiments.

In this embodiment, the metallic insert 452 (462) has an annular base part 471 that defines a pulley axle receiving bore 472 and a fastening part 473 that extends outwardly from the annular base part 471. The pulley axle receiving bore 472 of the metallic insert 452 (462) supports one end ofthe pulley bolt or axle 35 or 36 of the pulley 33 or 34. Preferably, the pulley axle receiving bore 472 of the metallic insert 452 (462) has internal threads for threadedly engaging the threads of the pulley bolt or axle 35 and 36. The fastening part 473 of the metallic insert 352 (362) is located at one axial end of the annular base part 471 so that an axial face 473a of the fastening part 473 is not embedded within the non-metallic cage body. The axial face 473a of the fastening part 473 faces away from the other cage plate, when the in use. Thus, the axle bolt applies a pulling force on the metallic insert 452 (462) that is directed from the axial face 473a ofthe fastening part 473 toward the other end ofthe metallic insert 452 (462). The fastening part 473 ofthe metallic insert 452 (462) includes a plurality (four) of projections that extends radially from the annular base part 471. However, the fastening part 473 can be formed as a single annular projection similar to the fourth embodiment.

### SIXTH EMBODIMENT

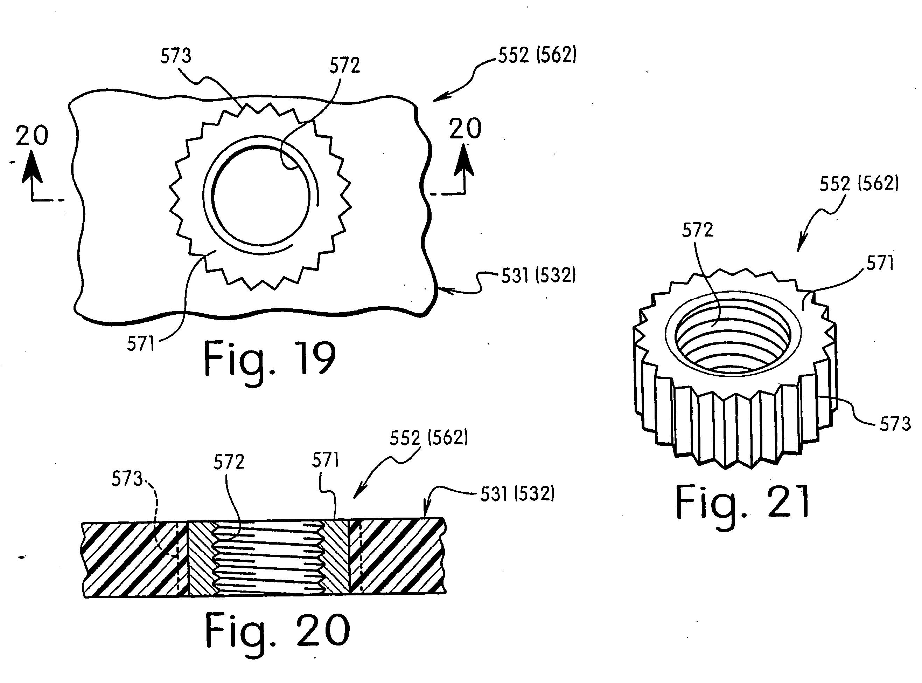

Referring now to Figures 19 to 21, a chain plate 531 (532) with a metallic insert 552 (562) will now be explained in accordance with the present invention. The chain plate 531 (532) can either the outer or inner chain plate with the metallic insert 552 (562) being either an upper axle attachment member or lower axle attachment member. In other words, the metallic insert 552 (562) can used in place of each of the metallic inserts 52 and 62 in each of the first, second and third embodiments. Thus, the shape of the chain plate 531 (532) is identical to anyone of the chain plates of first, second and third embodiments such that the chain plate 531 (532) has only one or two of the metallic inserts 552 (562) as needed and/or desired. For this reason, the reference numerals in the parenthesizes are used to indicate parts relating to the inner chain plate and the metallic insert(s) associated with the inner chain plate, while the reference numerals without parenthesizes are used to indicate parts relating to the outer chain plate and the metallic insert(s) associated with the outer chain plate.

In view of the similarity between this embodiment and the prior embodiments, the parts of this embodiment that are identical to the parts of the prior embodiment will be omitted for the sake of brevity. Rather, it will be apparent to those skilled in the art from this disclosure that a rear derailleur constructed with a pair of metallic inserts 552 (562) would be identical to the rear derailleur 12, except for the metallic inserts 552 (562) which are embedded in the chain plates in the same manner as either the first, second or third embodiments.

In this embodiment, the metallic insert 552 (562) has an annular base part 571 that defines a pulley axle receiving bore 572 and a fastening part 573 that extends outwardly from the annular base part 5"71. The pulley axle receiving bore 572 of the metallic insert 552 (562) supports one end of the pulley bolt or axle 35 or 36 of the pulley 33 or 34. Preferably, the pulley axle receiving bore 572 of the metallic insert 552 (562) has internal threads for threadedly engaging the threads of the pulley bolt or axle 35 and 36. The fastening part 573 of the metallic insert 552 (562) is partially embedded in the non-metallic cage body such that the axial end faces of fastening part 573 are exposed. The fastening part 573 of the metallic insert 552 (562) is preferably a plurality of ribs or projections that extends axially along the annular base part 571.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Also the terms "first" and "second" can be used interchangeably to describe the parts of the chain guide 24, e.g., the outer cage plate can be either the "first" cage plate or the "second" cage plate, the inner cage plate can be either the "first" cage plate or the "second" cage plate, the upper metallic insert can be either the "first" metallic insert or the "second" metallic insert, and the lower metallic insert can be either the "first" metallic insert or the "second" metallic insert. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle derailleur cage plate comprising:
a non-metallic cage body; and
a first metallic insert having a first pulley axle receiving bore and a first fastening part (573) at least partially embedded in the non-metallic cage body; **characterized in that**
the first fastening part (573) of the first metallic insert (552) is a plurality of first ribs or projections that extends axially along an annular base part of the first metallic insert (552), and wherein the plurality of first ribs or projections extends continuously along the annular base part from one end of the first metallic insert (552) to another other end of the first metallic insert (552).

2. The bicycle derailleur cage plate as set forth in claim 1, wherein
the first fastening part (573) of the first metallic insert (552) is completely embedded within the non-metallic cage body.

3. The bicycle derailleur cage plate as set forth in claim 1 or 2, wherein
the first ribs or projections of the first metallic insert (552) being completely embedded within the non-metallic cage body.

4. The bicycle derailleur cage plate as set forth in any one of claims 1 to 3, wherein
the first pulley axle receiving bore of the first metallic insert (552) includes internal threads.

5. The bicycle derailleur cage plate as set forth in any one of claims 1 to 4, further comprising
a second metallic insert having a second pulley axle receiving bore and a second fastening part embedded in the non-metallic cage body, in particular
the first and second metallic inserts being identically configured.

6. The bicycle derailleur cage plate as set forth in any one of claims 1 to 5, wherein
the non-metallic cage body includes a carbon fiber reinforced plastic.

7. A bicycle derailleur comprising:
a base member;
a linkage assembly movably coupled to the base member;
a movable member movably coupled to the linkage assembly; and
a chain guide movably coupled to the movable member, the chain guide including a first cage plate, a second cage plate, a first pulley rotatably supported between the first and second cage plates and a second pulley rotatably supported between the first and second cage plates, the first cage plate being as set forth in any one of claims 1 to 6.

8. The bicycle derailleur as set forth in claim 7, wherein
the second cage plate includes
a second non-metallic cage body; and
a second metallic insert having a second pulley axle receiving bore supporting a second pulley axle of the second pulley and a second fastening part at least partially embedded in the second non-metallic cage body.

9. The bicycle derailleur as set forth in claim 8, wherein the first and second metallic inserts are identically configured.

## Patentansprüche

1. Fahrradumwerferkäfigplatte, umfassend:
einen nichtmetallischen Käfigkörper; und
einen ersten metallischen Einsatz, der aufweist eine erste Rollenachsenaufnahmebohrung, sowie einen ersten Festmacherpart (573), zumindest teilweise eingebettet in den nichtmetallischen Käfigkörper; **dadurch gekennzeichnet, dass**
der erste Festmacherpart (573) des ersten metallischen Einsatzes (552) eine Vielzahl von ersten Rippen oder Vorsprüngen ist, sich axialwärts erstreckend entlang eines ringförmigen Basisparts des ersten metallischen Einsatzes (552), und wobei die Vielzahl von ersten Rippen oder Vorsprüngen sich kontinuierlich erstreckt entlang des ringförmigen Basisparts von einem Ende des ersten metallischen Einsatzes (552) zu einem anderen Ende des ersten metallischen Einsatzes (552).

2. Fahrradumwerferkäfigplatte nach Anspruch 1, bei welcher der erste Festmacherpart (572) des ersten metallischen Einsatzes (552) vollständig eingebettet ist in den nichtmetallischen Käfigkörper.

3. Fahrradumwerferkäfigplatte nach Anspruch 1 oder 2, bei welcher die ersten Rippen oder Vorsprüngen des ersten metallischen Einsatzes (552) vollständig eingebettet sind in den nichtmetallischen Käfigkörper.

4. Fahrradumwerferkäfigplatte nach einem der Ansprüche 1 bis 3, bei welcher die erste Rollenachsenaufnahmebohrung des ersten metallischen Einsatzes (552) Innengewinde aufweißt.

5. Fahrradumwerferkäfigplatte nach einem der Ansprüche 1 bis 4, ferner umfassend einen zweiten metallischen Einsatz, aufweisend eine zweite Rollenachsenaufnahmebohrung und einen zweiten Festmacherpart, eingebettet in den nichtmetallischen Käfigkörper, insbesondere sind die ersten und zweiten metallischen Einsätze identisch konfiguriert.

6. Fahrradumwerferkäfigplatte nach einem der Ansprüche 1 bis 5, bei welcher der nichtmetallische Käfigkörper einen kohlefaserverstärktes Kunststoff enthält.

7. Fahrradumwerfer, umfassend:
ein Basiselement;
eine Kopplungsanordnung, beweglich gekoppelt bezüglich dem Basiselement;
ein bewegliches Element, beweglich gekoppelt bezüglich der Kopplungsanordnung;
eine Kettenführung, beweglich gekoppelt bezüglich dem beweglich Element, wobei die Kettenführung eine erste Käfigplatte enthält, eine zweite Käfigplatte; eine erste Rolle, drehbar gestützt zwischen den ersten und zweiten Käfigplatten, sowie eine zweite Rolle, drehbar gestützt zwischen den ersten und zweites Käfigplatten, wobei die erste Käfigplatte der Art ist, wie beschrieben in einem der Ansprüche 1 bis 6.

8. Fahrradumwerfer nach Anspruch 7, bei welchem
die zweite Käfigplatte enthält,
einen zweiten nichtmetallischen Käfigkörper; und
einen zweiten metallischen Einsatz, aufweisend eine zweite Rollenachsenaufnahmebohrung, die eine zweite Rollenachse der zweiten Rolle stützt, sowie einen zweiten Festmacherpart, zumindest teilweise eingebettet in den zweiten nichtmetallischen Käfigkörper.

9. Fahrradumwerfer nach Anspruch 8, bei welchem die ersten und zweiten metallischen Einsätze identisch konfiguriert sind.

## Revendications

1. Plaque de cage de dérailleur de bicyclette comprenant :
un corps de cage non métallique ; et
un premier insert métallique avec un premier alésage de réception d'axe de poulie et une première partie d'attache (573) au moins partiellement incluse dans le corps de cage non métallique, **caractérisée en ce que**
la première partie d'attache (573) du premier insert métallique (552) est une pluralité de premiers épaulements ou projections qui s'étendent axialement le long d'une partie de base annulaire du premier insert métallique (552), et dans laquelle la pluralité de premiers épaulements ou projections s'étend de manière continue le long de la partie de base annulaire, depuis une extrémité du premier insert métallique (552) jusqu'à une autre extrémité du premier insert métallique (552).

2. Plaque de cage de dérailleur de bicyclette selon la revendication 1, dans laquelle la première partie d'attache (573) du premier insert métallique (152) est complètement incluse ou encastré à l'intérieur du corps de cage non métallique.

3. Plaque de cage de dérailleur de bicyclette selon la revendication 1 ou 2, dans laquelle les premiers épaulements ou projections du premier insert métallique (552) sont complètement inclus à l'intérieur du corps de cage non métallique.

4. Plaque de cage de dérailleur de bicyclette selon l'une quelconque des revendications 1 à 3, dans laquelle
le premier alésage de réception d'axe de poulie du premier insert métallique (552) comprend des filetages internes.

5. Plaque de cage de dérailleur de bicyclette selon l'une quelconque des revendications 1 à 4, comprenant, en outre,
un deuxième insert métallique ayant un deuxième alésage de réception d'axe de poulie et une deuxième partie d'attache incluse dans le corps de cage non-métallique, en particulier les premier et deuxième inserts métalliques étant configurés de manière identiques.

6. Plaque de cage de dérailleur de bicyclette selon l'une quelconque des revendications 1 à 5, dans laquelle le corps de cage non métallique comprend un plastique renforcé avec des fibres de carbone.

7. Dérailleur de bicyclette comprenant :
un élément de base ;
un ensemble de liaison, relié mobile à l'élément de base ;
un élément mobile, relié mobile à l'ensemble de liaison ; et
un guide de chaîne relié mobile à l'élément mobile, le guide de chaîne comprenant une première plaque de cage, une deuxième plaque de cage, une première poulie supportée rotative entre les première et deuxième plaques de cage, et une deuxième poulie supportée rotative entre les première et deuxième plaques de cage, la première plaque de cage étant telle qu'exposée dans l'une quelconque des revendications 1 à 6.

8. Dérailleur de bicyclette selon la revendication 7, dans lequel
la deuxième plaque de cage comprend
un deuxième corps de cage non métallique ; et
un deuxième insert métallique ayant un deuxième alésage de réception d'axe de poulie supportant un deuxième axe de poulie de la deuxième poulie et une deuxième partie d'attache au moins partiellement incluse dans le corps de cage non métallique.

9. Dérailleur de bicyclette selon la revendication 8, dans lequel les premier et deuxième inserts métalliques sont configurés de manière identique.
